# EUROPÄISCHE PATENTSCHRIFT

(11) **EP 3 476 459 B1**
(45) Veröffentlichungstag und Bekanntmachung des Hinweises auf die Patenterteilung: **14.10.2020**
(21) Anmeldenummer: 17400060.4
(22) Anmeldetag: 24.10.2017
(51) Int. Cl.: B01D 53/14, C10K 1/00, C10K 1/26, C10K 1/16, B01D 3/06, B01D 3/00, B01D 3/16, B01D 3/34, B01D 5/00, B01J 19/30, B01J 19/32, B01D 19/00, C10K 1/04

(54) **ANLAGE UND VERFAHREN ZUR ABTRENNUNG VON SCHWEFELHALTIGEN KOMPONENTEN AUS BELADENEM METHANOL**
INSTALLATION AND PROCESS FOR THE SEPARATION OF SULPHUR-CONTAINING COMPOUNDS FROM METHANOL
INSTALLATION ET PROCÉDÉ DE SÉPARATION DE COMPOSANTS CONTENANT DU SOUFRE À PARTIR DU MÉTHANOL CHARGÉ

(43) Veröffentlichungstag der Anmeldung: 01.05.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, D-60486 Frankfurt am Main (DE); Gubrinski, Alfred, D-64390 Erzhausen (DE); Corbet, Sharon, D-60438 Frankfurt am Main (DE); Leichner, Hincal, D-65429 Hochheim (DE)
(74) Vertreter: Dropsch, Holger

(56) Entgegenhaltungen:
- EP-A1- 0 054 783
- EP-A1- 2 228 119
- DE-A1- 19 610 485
- US-A- 4 332 596
- Arthur L. Kohl ET AL: "Gas Purification" In: "Gas Purification", 28. August 1997 (1997-08-28), GULF PUBLISHING COMPANY, HOUSTON, TEXAS 022729, XP055464432, ISBN: 978-0-88415-220-0 Seiten 189-190, 196, * Abbildungen 3-1 * * Seiten 189, 190, 196 *

## Beschreibung

### Gebiet der Erfindung

Die Erfindung betrifft eine Verwendung einer Anlage zur Abtrennung von schwefelhaltigen Komponenten aus Methanol, das als Absorptionsmittel zur Wäsche von Synthesegas verwendet wurde.

Die Erfindung betrifft weiterhin ein Verfahren zur Abtrennung von schwefelhaltigen Komponenten, welche H₂S. COS und Mercaptane umfassen, aus einer flüssigen, hauptsächlich Methanol umfassenden Phase.

### Stand der Technik

Derartige Anlagen sind bekannt, sie werden oft zur Abtrennung schwefelhaltiger Komponenten aus Methanol das als Absorptionsmittel in einer Anlage zur Abtrennung von Kohlendioxid und schwefelhaltigen Begleitgasen aus einem Rohsynthesegas verwendet wurde, eingeselzt.

Das Dokument Arthur L. Kohl et al: "Gas Purification", In: "Gas Purification", 28.08.1997, GULF PUBLISHING COMPANY, Houston, Texas, offenbart eine Anlage, geeignet zur Abtrennung von schwefelhaltigen Komponenten aus Methanol das als Absorptionsmittel zur Wäsche von Synthesegas verwendet wurde, umfassend
- eine Destillationskolonne ("Amine Regenerator"), umfassend einen Zulauf für die Einleitung des beladenen Methanols, einen Auslass für das von seiner Beladung befreite Methanol, einen Auslass für das Kopfprodukt, einen Zulauf für den Rücklauf des Kopfprodukts, Einbauten für den Stoffaustausch, einen Wärmetauscher ("Reboiler") für den Wärmeeintrag in das Methanol,
- ein Kreislauf für das Kopfprodukt, umfassend mindestens einen Wärmeaustauscher zum Kühlen des Kopfprodukts ("CW Overbead Condensed) und zum Auskondensieren der darin enthaltenen kondensierbaren Komponenten, sowie einen Flüssigkeitsabscheider ("Reflux Drum") zur Abtrennung des Kondensats aus dem Kopfprodukt, wobei der Kreislauf für das Kopfprodukt weiterhin eine Stipp-Kolonne zur Abtrennung flüchtiger Komponenten aus dem Kondensat umfasst.

EP0054783 offenbart ein Verfahren und eine Anlage zum Abtrennen von Schwefelwasserstoff und Kohlendioxid aus einem Gasgemisch z.B. Synthesegas.

Anlagen zur Abtrennung der Begleitgase aus einem Rohsynthesegas arbeiten häufig nach dem sogenannten Rectisol-Verfahren, welches in Ullmann's Encyctopedia of Industrial Chemistry, 6. Aufl. Bd. 15, S. 399 ff. grundsätzlich beschrieben wird. Dieses Verfahren dient dazu, Rohsynthesagas, hauptsächlich aus CO und H₂ bestehend und hergestellt durch partielle Oxidation von Schwerölen, Petrolkoks, Abfatistoffen oder durch Kohle- bzw. Ölrückstandsvergasung, von Begleitgasen zu reinigen. Das Rectisol-Verfahren verwendet als Absorptionsmittel tief gekühltes Methanol, wobei die Eigenschaft des Methanols ausgenutzt wird, dass seine Absorptionsfähigkeit für die Begleitstoffe mit abnehmender Temperatur stark zunimmt, während sie für CO und H₂ praktisch konstant bleibt.

Beim Rectisol-Verfahren wird zwischen dem Standard- und dem selektiven Rectisol-Verfahren unterschieden; die vorliegende Erfindung betrifft das selektive Verfahren, wie es in Figure 46 der oben genannten Literaturstelle gezeigt ist.

Bei den unerwünschten Begleitstoffen, die durch das Rectisol-Verfahren aus dem Synthesegas abgetrennt werden, handelt es sich hauptsächlich um die Begleitgase Carbonylsulfid (COS), Schwefelwasserstoff (H₂S) und Kohlendioxid (CO₂), häufig sind aber auch Mercaptane im Synthesegas enthalten, die ebenfalls vom Methanol absorbiert und damit aus dem Synthesegas abgetrennt werden.

Bei der innerhalb des Rectisol-Verfahrens erfolgenden Aufarbeitung des durch die Absorption der Begleitgase beladenen Methanols stellen die Mercaptane ein Problem dar. Die Abtrennung der absorbierten schwefelhaltigen Begleitgase erfolgt durch Aufkochen des beladenen Methanols in der in oben genannter Figure 46 mit dem Buchstaben f als Hot regeneration bezeichneten Kolonne. Die dabei als Kopfprodukt der Kolonne entstehende Gasphase enthält, neben den schwefelhaltigen Begleitgasen, auch einen Methanolanteil, der in einem Kreislauf für das Kopfprodukt auskondensiert und zurückgeführt wird (in dieser Figure 46 nicht dargestellt). Die in der Gasphase enthaltenen Mercaptane werden dabei vom auskondensierten Methanol rückabsorbiert, während das übrige Gas, hauptsächlich Carbonylsulfid (COS) und Schwefelwasserstoff (H₂S) enthaltend, zur weiteren Behandlung aus dem Rectisol-Verfahren ausgeleitet wird. Mit dieser Verfahrensweise können die Mercaptane und Thiophen allerdings nicht aus dem Methanol entfernt werden. Um den Mercaptangehalt im Methanol zu begrenzen, wird daher bisher dem Methanol kontinuierlich ein blow down-Strom entnommen und ein make up-Strom hinzugefügt, was zu Methanolverlusten führt. Aufgabe der Erfindung ist es daher, eine Anlage und ein Verfahren zur Verfügung zu stellen, mit der bzw. mit dem es möglich ist, Mercaptane und Thiophen aus dem aus dem Kopfprodukt der Hot regeneration-Kolonne auskondensierten Methanol abzutrennen und dabei geringere Methanolverluste zu verursachen,

### Beschreibung der Erfindung

Die Aufgabe wird durch eine Verwendung einer Anlage gemäß Anspruch 1 und durch ein Verfahren gemäß Anspruch 6 gelöst.

### Bevorzugte Ausgestaltungen der Erfindung

Eine bevorzugte Ausgestaltung der Erfindung ist dadurch gekennzeichnet, dass die Stripp-Kolonne eine Füllkörperschüttung oder eine strukturierte Packung enthält, oder dass sie mit Böden ausgestattet ist. Diese Einbauten zur Förderung des Stoffaustauschs haben sich bewährt und sind auf dem Markt problemlos verfügbar.

Eine weitere bevorzugte Ausgestaltung der Erfindung ist dadurch gekennzeichnet, dass der Kreislauf für das Kopfprodukt mindestens eine Pumpe zur Förderung des Rücklaufs umfasst. Da es im Flüssigkeitsabscheider zu einer Druckabsenkung im Kreislauf für das Kopfprodukt kommen kann, kann auch in diesem Fall das auskondensierte Methanol durch die Pumpe, als Rücklauf, in die Kolonne zurück gefördert werden.

Eine weitere bevorzugte Ausgestaltung der Erfindung ist dadurch gekennzeichnet, dass der Kreislauf für das Kopfprodukt weiterhin mit einem weiteren Kühler und einem weiteren Flüssigkeitsabscheider ausgestattet ist, wobei der Kühler zum Auskondensieren von Methanol aus dem ausgestrippten Gas, der Flüssigkeitsabscheider zum Abtrennen des auskondensierten Methanols aus dem ausgestrippten Gas dient. Das auskondensierte Methanol wird in die Strippkolonne zurückgeführt. Durch diese Maßnahme wird der in der Stripp-Kolonne verursachte Methanolverlust gesenkt.

Die Wäsche zur Abtrennung von Kohlenstoffdioxid wird in Figure 46 des oben erwähnten Kapitels der Ullmann's Encyclopedia durch die mit dem Buchstaben b gekennzeichnete Kolonne ausgeführt, die Wäsche zur Abtrennung der schwefelhaltigen Begleitgase durch die in dieser Figure 46 mit a gekennzeichneten Kolonne.

Die zur Anlage der erfindungsgemäßen Verwendung gehörende Destillationskolonne entspricht dabei der mit dem Buchstaben f in Figure 46 des oben erwähnten Kapitels der Ullmann's Encydopedia gekennzeichneten Kolonne zur Heissregenerierung (Hot regeneration).

Eine weitere bevorzugte Ausgestaltung der Erfindung ist dadurch gekennzeichnet, dass, bei dieser Verwendung, als Strippgas, aus dem im Rectisol-Prozess beladenen (Methanol ausgeflashtes Gas verwendet wird. Der o, g. Figure 46 des benannten Ullmann-Bandes, kann entnommen werden, dass das Synthesegas in einer ersten Kolonne, dort mit a, und in einer zweiten, mit b bezeichneten Kolonne mit Methanol gewaschen wird. Das dabei bei der Wäsche beladene Methanol wird jeweils in einen unteren Teil der Kolonne, der gasdicht vom oberen Teil, in dem die Wäsche erfolgt, abgetrennt ist, abgeleitet, wobei es geflasht wird. Das dabei ausgeflashte Gas wird dem Rohsynthesegas wieder beigemischt. Erfindungsgemäß kann diesem ausgeflashten Gas ein Teilstrom entnommen und als Strippgas verwendet werden (in o. g. Figure 46 nicht dargestellt).

Eine weitere Möglichkeit zur Erzeugung eines Strippgases zur erfindungsgemäßen Verwendung besteht darin, es aus dem Methanol auszuflashen, das von der, in o. g. Figure 46 mit den Buchstaben d und e gekennzeichneten Stripper-/Reabsorber-Kolonne kommende Methanol zu flashen, bevor es in die mit f gekennzeichnete Heissregenerierungskolonne eingeleitet wird, die der zur Anlage der erfindungsgemäßen Verwendung gehörenden Destillationskolonne entspricht.

Eine weitere bevorzugte Ausgestaltung der Erfindung ist dadurch gekennzeichnet, dass als Strippgas das vom Kohlenstoffdioxid und/oder von den schwefelhaltigen Komponenten befreite Synthesegas verwendet wird.

Eine weitere bevorzugte Ausgestaltung der Erfindung ist dadurch gekennzeichnet, dass als Strippgas der gasförmige Teil des Kopfprodukts verwendet wird, Ein Teilstrom dieses gasförmigen Teils des Kopfprodukts wird dabei verdichtet und zur Stripp-Kolonne zurückgeführt.

Eine weitere bevorzugte Ausgestaltung der Erfindung ist dadurch gekennzeichnet, dass bei der erfindungsgemäßen Verwendung der Anlage als Strippgas Wasserstoff oder Stickstoff verwendet wird.

Die Erfindung umfasst weiterhin ein Verfahren zur Abtrennung von schwefelhaltigen Komponenten, welche H₂S, COS und Mercaptane umfassen, aus einer flüssigen, hauptsächlich Methanol umfassenden Phase, mittels einer Anlage, umfassend:
- eine Destillationskolonne, umfassend einen Zulauf für die Einleitung des beladenen Methanols, einen Auslass für das von seiner Beladung befreite Methanol, einen Austass für das Kopfprodukt, einen Zulauf für den Rücklauf des Kopfprodukts, Einbauten für den Stoffaustausch, einen Wärmetauscher für den Wärmeeintrag in das Methanol,
- ein Kreislauf für das Kopfprodukt, umfassend mindestens einen Wärmeaustauscher zum Kühlen des Kopfprodukts und zum Auskondensieren der darin enthaltenen kondensierbaren Komponenten, sowie einen Flüssigkeitsabscheider zur Abtrennung des Kondensats aus dem Kopfprodukt, wobei der Kreislauf für das Kopfprodukt weiterhin eine Stripp-Kolonme zur Abtrennung flüchtiger Komponenten aus dem Kondensat, sowie einen stromwärts vor dem Stripper angeordneten Heizer zur Erwärmung des Kondensats, umfasst
umfassend die folgenden Verfahrensschritte;
- Einleitung der flüssigen Phase in eine Destillationskolonne,
- Destillation der flüssigen Phase und dabei Abtrennen der schwefelhaltigen Komponenten und Ausleitung dieser Komponenten aus der Destillationskolonne als gasförmiges Kopfprodukt,
- Abkühlung des Kopfprodukts und dabei Auskondensieren einer flüssigen, hauptsächlich Methanol und Mercaptane umfassenden Phase,
- Abtrennen der flüssigen Phase aus dem Kopfprodukt,
- Einleitung der flüssen, hauptsächlich Methanol und Mercaptane umfassenden Phase als Rücklauf In die Destillationskolonne,
dadurch gekennzeichnet, dass aus der auskondensierten und abgeschiedenen flüssigen Phase die Mercaptane durch Strippen abgetrennt werden, wobei ein Gasgemisch umfassend Mercaplane und das zum Strippen verwendete Gas erhalten wird und wobei dieses Gasgemisch einer weiteren Behandlung außerhalb des Verfahrens zugeführt wird.

Eine bevorzugte Ausgestaltung der Erfindung ist dadurch gekennzeichnet, dass bei dem Verfahren das Gasgemisch abgekühlt wird, wobei eine flüssige, hauptsächlich Methanol umfassende Phase auskondensiert, aus dem Gasgemisch abgetrennt und in die flüssige, aus dem Kopfprodukt abgetrennte Phase eingeleitet wird.

### Ausfuhrungsbeispiel

Weitere Merkmale, Vorteile und Anwendungsmöglichkeiten der Erfindung ergeben sich auch aus der nachfolgenden Beschreibung eines Ausführungsbeispiels und der Zeichnung.

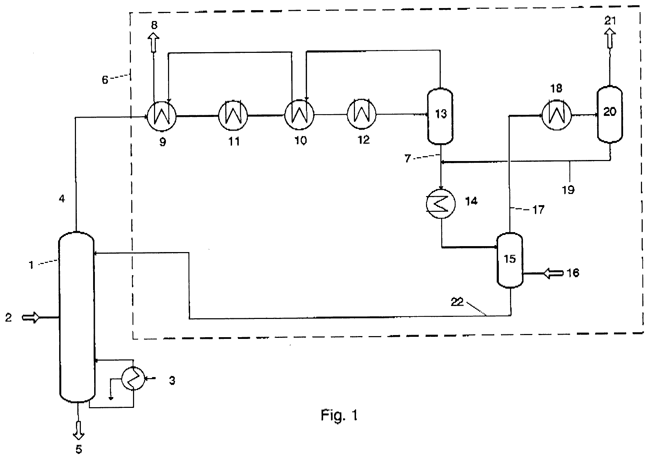

Anhand der einigen Zeichnung, Fig. 1, soll im Folgenden die Erfindung erläutert werden. Dabei zeigt Fig. 1 ein Fließbild einer beispielhaften Ausführung einer erfindungsgemäßen Verwendung der Anlage bzw. des erfindungsgemäßen Verfahrens.

In der Destillationskolonne 1 wird mit schwefelhaltigen Begleitstoffen, hauptsächlich H₂S, COS und Mercaptanen, beladenes Methanol 2, durch Eintrag von Wärme in das Methanol, von diesen Begleitstoffen befreit, Sie ist Teil einer hier nicht dargestellten Rectisol-Anlage. In Figure 46 im oben erwähnten Band der Ullmann Enzyklopädie ist die entsprechende Kolonne mit dem Buchstaben f gekennzeichnet.

Das Methanol 2 wurde bereits in, hier nicht dargestellten, vorhergehenden Schritten des Rectisol-Verfahrens von Kohlendioxid befreit. Das Methanol 2 wird in der Kolonne 1 mittels Dampf 3 erhitzt, wodurch die flüchtigen, schwefelhaltigen Begleitstoffe aus dem Methanol ausgetrieben werden und als Kopfprodukt 4 die Kolonne 1 verlassen.

Als Sumpfprodukt 5 wird von Begleitstoffen befreites Methanol erhalten, das zur erneuten Verwendung als Absorptionsmittel in das Rectisol-Verfahren zurückgeführt wird.
Im Kreislauf 6 für das Kopfprodukt 4 wird dieses in mehreren Stufen abgekühlt und dabei eine flüssige, hauptsächlich Methanol und Mercaptane enthaltene Phase 7 auskondensiert, sodass ein gasförmiger, hauptsächlich H₂S und COS enthaltender Strom 8 übrig bleibt, der zur weiteren Behandlung aus der Anlage ausgeleitet wird. Dabei erfolgt die Abkühlung und Auskondensation in den Wärmeaustauschern 9 und 10 durch Wärmeaustausch im Gegenstrom mit Strom 8, in den Wärmeaustauschern 11 und 12 durch Abkühlung mit Kältemitteln, worunter hier auch Kühl- und Kaltwasser verstanden werden. In Flüssigkeitsabscheider 13 wird das angefallene Kondensat 7 abgetrennt. Es ist auch möglich, das in den Wärmeaustauschern 9 bis 12 anfallende Kondensat durch separate, in Fig. 1 nicht dargestellten, Rohrleitungen aus diesen Wärmeaustauschern abzuleiten und mit dem Kondensatstrom 7 zusammenzuführen. Zur Abtrennung der Mercaptane wird das Kondensat 7 in Wärmeaustauscher 14 erwärmt und in die Stripp-Kolonne 15 eingeleitet. Mit einem Stripp-Gas-Strom 16 werden die Mercaptane und Thiophene ausgestrippt. Das dabei entstehende Mercaptan-Stripp-Gas-Gemisch 17 wird im Kühler 18 abgekühlt, um mitgerissenes Methanol 19 auszukondensieren, das in Flüssigkeitsabscheider 20 abgetrennt und dem Kondensat 7 beigefügt wird. Aus dem Flüssigkeitsabscheider 20 wird das von Methanolresten 19 befreite Mercaptan-Stripp-Gas-Gemisch 21 zur weiteren Behandlung außerhalb des Verfahrens ausgeleitet. Es kann beispielsweise einem Verfahren zur Schwefelrückgewinnung, z. B. nach dem Claus-Verfahren, zugeführt werden.

Das aus dem Kopfprodukt 4 abgeschiedene, und von schwefelhaltigen Begleitstoffen, einschließlich Mercaptanen, weitgehend befreite Methanol 22, wird aus der Stripp-Kolonne 15 ausgeleitet und in die Destillationskolonne 1 eingeleitet.

### Gewerbliche Anwendbarkeit

Mit der Erfindung wird eine Verwendung einer Anlage und ein Verfahren zur Verfügung gestellt, mit dem die Entfernung von Mercaptanen aus im Rectisol-Prozess als Absorptionsmittel verwendetem Methanol unter Verursachung nur kleiner Methanolverluste möglich ist. Dadurch wird die Wirtschaftlichkeit des Rectisol-Prozesses verbessert. Die Erfindung ist daher gewerblich anwendbar.

### Bezugszeichenliste

- 1: Destillationskolonne
- 2: Methanol, beladen
- 3: Heizdampf
- 4: Kopfprodukt
- 5: Methanol, gereinigt
- 6: Kreislauf für das Kopfprodukt
- 7: Kondensat, Methanol und Mercaptane enthaltend
- 8: schwefelhaltige Begleitstoffe, hauptsächlich H₂S und COS
- 9: Wärmeaustauscher, Kühler
- 10: Wärmeaustauscher, Kühler
- 11: Wärmeaustauscher, Kühler
- 12: Wärmeaustauscher, Kühler
- 13: Flüssigkeitsabscheider
- 14: Wärmeaustauscher, Erhitzer
- 15: Stripp-Kolonne
- 16: Stripp-Gas
- 17: Mercaptan-Stripp-Gas-Gemisch mit Methanolresten
- 18: Wärmeaustauscher, Kühler
- 19: Methanol
- 20: Flüssigkeitsabscheider
- 21: Mercaptan-Stripp-Gas-Gemisch
- 22: Methanol-Rücklauf

## Patentansprüche

1. Verwendung einer Anlage, umfassend;
- eine Destillationskolonne, umfassend einen Zulauf für die Einleitung des beladenen Methanols, einen Auslass für das von seiner Beladung befreite Methanol, einen Auslass für das Kopfprodukt, einen Zulauf für den Rücklauf des Kopfprodukts, Einbauten für den Stoffaustausch, einen Wärmetauscher für den Wärmeeintrag in das Methanol,
- ein Kreislauf für das Kopfprodukt, umfassend mindestens einen Wärmeaustauscher zum Kühlen des Kopfprodukts und zum Auskondensieren der darin enthaltenen kondensierbaren Komponenten, sowie einen Flüssigkeitsabscheider zur Abtrennung des Kondensats aus dem Kopfprodukt, wobei der Kreislauf für das Kopfprodukt weiterhin eine Stripp-Kolonne zur Abtrennung flüchtiger Komponenten aus dem Kondensat, sowie einen stromwärts vor dem Stripper angeordneten Heizer zur Erwärmung des Kondensats, umfasst,
als Teil einer Anlage zur Reinigung von Rohsynthesegas durch Abtrennung von Kohlendioxid und schwefelhaltigen Begleitgasen, wobei tiefgekühltes Methanol als Absorptionsmittel verwendet wird, zur Abtrennung von schwefelhaltigen Komponenten aus dem beladenen Methanol, wobei die Anlage zur Reinigung von Rohsynthesegas jeweils eine Wäsche zur Abtrennung der schwefelhaltigen Komponenten des Rohsynthesegases und eine zur Abtrennung des im Rohsynthesegas enthaltenen Kohlenstoffdioxids umfasst, und wobei diese Anlage zur Reinigung des Rohsynthesegases Einrichtungen zum Flashen des bei diesen Abtrennungsschritten beladenen Methanols umfasst.

2. Verwendung einer Anlage gemäß Anspruch 1, **dadurch gekennzeichnet, dass** als Strippgas das aus dem Methanol ausgeflashte Gas, ganz oder teilweise, verwendet wird.

3. Verwendung einer Anlage gemäß Anspruch 1, **dadurch gekennzeichnet, dass** als Strippgas das vom Kohlenstoffdioxid und/oder von den schwefelhaltigen Komponenten befreite Synthesegas verwendet wird.

4. Verwendung einer Anlage gemäß Anspruch 1, **dadurch gekennzeichnet, dass** als Strippgas der gasförmige Teil des Kopfprodukts verwendet wird.

5. Verwendung einer Anlage gemäß Anspruch 1, **dadurch gekennzeichnet, dass** als Strippgas Wasserstoff oder Stickstoff verwendet wird.

6. Verfahren zur Abtrennung von schwefelhaltigen Komponenten, welche H₂S, COS und Mercaptane umfassen, aus einer flüssigen, hauptsächlich Methanol umfassenden Phase mittels einer Anlage, umfassend:
- eine Destillationskolonne, umfassend einen Zulauf für die Einleitung des beladenen Methanols, einen Auslass für das von seiner Beladung befreite Methanol, einen Auslass für das Kopfprodukt, einen Zulauf für den Rücklauf des Kopfprodukts, Einbauten für den Stoffaustausch, einen Wärmetauscher für den Wärmeeintrag in das Methanol,
- ein Kreislauf für das Kopfprodukt, umfassend mindestens einen Wärmeaustauscher zum Kühlen des Kopfprodukts und zum Auskondensieren der darin enthaltenen kondensierbaren Komponenten, sowie einen Flüssigkeitsabscheider zur Abtrennung des Kondensats aus dem Kopfprodukt, wobei der Kreislauf für das Kopfprodukt weiterhin eine Stripp-Kolonne zur Abtrennung flüchtiger Komponenten aus dem Kondensat, sowie einen stromwärts vor dem Stripper angeordneten Heizer zur Erwärmung des Kondensats, umfasst,
wobei das Verfahren die die folgenden Verfahrensschritte umfasst;
- Einleitung der flüssigen Phase in eine Destillationskolonne,
- Destillation der flüssigen Phase und dabei Abtrennen der schwefelhaltigen Komponenten und Ausleitung dieser Komponenten aus der Destillationskolonne als gasförmiges Kopfprodukt,
- Abkühlung des Kopfprodukts und dabei Auskondensieren einer flüssigen, hauptsächlich Methanol und Mercaptane umfassenden Phase,
- Abtrennen der flüssigen Phase aus dem Kopfprodukt,
- Einleitung der flüssigen, hauptsächlich Methanol und Mercaptane umfassenden Phase, als Rücklauf, in die Destillationskolonne,
**dadurch gekennzeichnet, dass** aus der auskondensierten und abgeschiedenen flüssigen Phase die Mercaptane durch Strippen abgetrennt werden, wobei ein Gasgemisch, umfassend Mercaptane und das zum Strippen verwendete Gas erhalten wird und wobei dieses Gasgemisch einer weiteren Behandlung außerhalb des Verfahrens zugeführt wird.

7. Verfahren gemäß Anspruch 6, **dadurch gekennzeichnet, dass** das Gasgemisch abgekühlt wird, wobei eine flüssige, hauptsächlich Methanol umfassende Phase auskondensiert, aus dem Gasgemisch abgetrennt und in die flüssige, aus dem Kopfprodukt abgetrennte Phase eingeleitet wird.

## Claims

1. Use of a plant, comprising:
- a distillation column, comprising an inlet for the feeding-in of the laden methanol, an outlet for the methanol freed of its load, an outlet for the top product, an inlet for the reflux of the top product, internals for the mass transfer, a heat exchanger for introducing heat into the methanol,
- a circulating loop for the top product, comprising at least one heat exchanger to cool the top product and to condense the condensable components contained therein, and a liquid separator for the separation of the condensate from the top product, whereby the circulating loop for the top product comprises furthermore a stripping column for separating volatile components out of the condensate, and also a heater, arranged upstream of the stripper, for heating the condensate,
as part of a plant for the purification of raw synthesis gas through separation of carbon dioxide and sulphur-containing accompanying gases, whereby low-temperature methanol is used as absorption agent, to separate sulphur-containing components from the laden metha nol, whereby the plant for the purification of raw synthesis gas comprises, respectively, a scrubber for the separation of the sulphur-containing components of the raw synthesis gas and one for the separation of the carbon dioxide contained in the raw synthesis gas, and whereby this plant for the purification of the raw synthesis gas comprises devices for the flashing of the methanol laden during these separation steps.

2. Use of a plant according to claim 1, **characterised in that** the gas flashed out of the methanol is used in whole or in part as stripping gas.

3. Use of a plant according to claim 1, **characterised in that** the synthesis gas freed of the carbon dioxide and/or of the sulphur-containing components is used as stripping gas.

4. Use of a plant according to claim 1, **characterised in that** the gaseous part of the top product is used as stripping gas.

5. Use of a plant according to claim 1, **characterised in that** hydrogen or nitrogen is used as stripping gas.

6. Method for the separation of sulphur-containing components, which comprise H₂S, COS and mercaptans, from a liquid, mainly methanol-comprising phase by means of a plant, comprising:
- a distillation column, comprising an inlet for the feeding-in of the laden methanol, an outlet for the methanol freed of its load, an outlet for the top product, an inlet for the reflux of the top product, internals for the mass transfer, a heat exchanger for introducing heat into the methanol,
- a circulating loop for the top product, comprising at least one heat exchanger to cool the top product and to condense the condensable components contained therein, and a liquid separator for the separation of the condensate from the top product, whereby the circulating loop for the top product comprises furthermore a stripping column for separating volatile components out of the condensate, and also a heater, arranged upstream of the stripper, for heating the condensate,
whereby the method comprises the following method steps:
- feeding-in of the liquid phase into a distillation column,
- distillation of the liquid phase and, with that, separation of the sulphur-containing components and discharge of these components from the distillation column as gaseous top product,
- cooling of the top product and, with that, condensing of a liquid phase comprising mainly methanol and mercaptans,
- separating-out of the liquid phase from the top product,
- feeding-in of the liquid phase, comprising mainly methanol and mercaptans, as reflux, into the distillation column,
**characterised in that** the mercaptans are separated out of the condensed and separated-out liquid phase through stripping, whereby a gas mixture, comprising mercaptans and the gas used for stripping, is obtained and whereby this gas mixture is sent for further treatment outside the method.

7. Method according to claim 6, **characterised in that** the gas mixture is cooled, whereby a liquid phase comprising mainly methanol is condensed, separated out from the gas mixture and fed into the liquid phase separated out from the top product.

## Revendications

1. Utilisation d'une installation, comprenant ;
- une colonne de distillation, comprenant une arrivée pour l'introduction du méthanol chargé, une sortie pour le méthanol libéré de son chargement, une sortie pour le produit de tête, une arrivée pour le retour du produit de tête, des installations pour l'échange de substance, un échangeur de chaleur pour l'arrivée de chaleur dans le méthanol,
- un circuit pour le produit de tête, comprenant au moins un échangeur de chaleur pour refroidir le produit de tête et pour décondenser les composants condensables contenus dans celui-ci, ainsi qu'un séparateur de liquide pour séparer le condensat du produit de tête, dans lequel le circuit du produit de tête comprend en outre une colonne de stripage pour séparer des composants volatils du condensat, ainsi qu'un chauffage agencé en amont du strippeur pour chauffer le condensat,
en tant que partie d'une installation pour la purification du gaz de synthèse brut par séparation de dioxyde de carbone et de gaz associés contenant du soufre, dans laquelle du méthanol surgelé est utilisé comme moyen absorbant, pour la séparation de composants contenant du soufre du méthanol chargé, dans laquelle l'installation pour la purification de gaz de synthèse brut comprend respectivement un laveur pour la séparation des composants contenant du soufre du gaz de synthèse brut et un pour la séparation du dioxyde de carbone contenu dans le gaz de synthèse brut, et dans laquelle cette installation pour la purification du gaz de synthèse brut comprend des dispositifs pour le flashing du méthanol chargé lors de ces étapes de séparation.

2. Utilisation d'une installation selon la revendication 1, **caractérisée en ce que** le gaz issu du flashing du méthanol est, en tout ou en partie, utilisé comme gaz de stripage.

3. Utilisation d'une installation selon la revendication 1, **caractérisée en ce que** le gaz de synthèse libéré du dioxyde de carbone et/ou des composants contenant du soufre est utilisé comme gaz de stripage.

4. utilisation d'une installation selon la revendication 1, **caractérisée en ce que** la partie gazeuse du produit de tête est utilisée comme gaz de stripage.

5. Utilisation d'une installation selon la revendication 1, **caractérisée en ce que** de l'hydrogène ou de l'azote est utilisé comme gaz de stripage.

6. Procédé de séparation de composants contenant du soufre comprenant du H₂S_{,} du COS et des mercaptans à partir d'une phase liquide comprenant principalement du méthanol au moyen d'une installation, comprenant :
- une colonne de distillation, comprenant une arrivée pour l'introduction du méthanol chargé, une sortie pour le méthanol libéré de son chargement, une sortie pour le produit de tête, une arrivée pour le retour du produit de tête, des installations pour l'échange de substance, un échangeur de chaleur pour l'arrivée de chaleur dans le méthanol,
- un circuit pour le produit de tête, comprenant au moins un échangeur de chaleur pour refroidir le produit de tête et pour décondenser les composants condensables contenus dans celui-ci, ainsi qu'un séparateur de liquide pour séparer le condensat du produit de tête, dans lequel le circuit du produit de tête comprend en outre une colonne de stripage pour séparer des composants volatils du condensat, ainsi qu'un chauffage agencé en amont du strippeur pour chauffer le condensat,
dans lequel le procédé comprend les étapes de procédé suivantes :
- introduction de la phase liquide dans une colonne de distillation,
- distillation de la phase liquide et pour ce faire, séparation des composants contenant du soufre et évacuation de ces composants de la colonne de distillation en tant que produit de tête gazeux,
- refroidissement du produit de tête, et pour ce faire, condensation d'une phase liquide, comprenant principalement du méthanol et des mercaptans,
- séparation de la phase liquide du produit de tête,
- introduction de la phase liquide, comprenant principalement du méthanol et des mercaptans, comme retour, dans la colonne de distillation,
**caractérisé en ce que** les mercaptans sont séparés de la phase liquide décondensée et isolée par stripage, dans lequel un mélange gazeux comprenant des mercaptans et le gaz utilisé pour le stripage est obtenu et dans lequel ce mélange gazeux est amené à un traitement supplémentaire en dehors du procédé.

7. Procédé selon la revendication 6, **caractérisé en ce que** le mélange gazeux est refroidi, dans lequel une phase liquide comprenant principalement du méthanol se décondense, est séparée du mélange gazeux et est introduite dans la phase liquide séparée du produit de tête.
